# EUROPÄISCHE PATENTSCHRIFT

(11) **EP 2 229 685 B1**
(45) Veröffentlichungstag und Bekanntmachung des Hinweises auf die Patenterteilung: **18.05.2011**
(21) Anmeldenummer: 08870720.3
(22) Anmeldetag: 29.12.2008
(51) Int. Cl.: H01H 83/14, H02H 1/00, H02H 3/33

(54) **LICHTBOGENSCHUTZMODUL**
ARC PROTECTION MODULE
MODULE DE PROTECTION CONTRE LES ARCS ÉLECTRIQUES

(30) Priorität: 17.01.2008 DE 102008004869
(43) Veröffentlichungstag der Anmeldung: 22.09.2010
(73) Patentinhaber: Siemens Aktiengesellschaft, 80333 München (DE)
(72) Erfinder: HUBER, Hans-Jürgen, 93047 Regensburg (DE); MARTEL, Jean-Mary, 93105 Tegernheim (DE); KLEEMEIER, Manfred, 93073 Neutraubling (DE)
(86) Internationale Anmeldenummer: PCT/EP2008/068315
(87) Internationale Veröffentlichungsnummer: WO 2009/089994

(56) Entgegenhaltungen:
- WO-A-00/36623
- DE-A1- 4 316 239
- US-B1- 6 259 340
- US-B1- 6 313 641

## Beschreibung

Die Erfindung befasst sich mit dem Schutz vor in einem Stromkreis auftretenden Lichtbögen.

Ein Lichtbogen kann in einem Stromkreis z. B. auftreten, wenn ein Lichtschalter defekt ist und der Abstand zwischen zwei Kontakten des Lichtschalters zu klein ist, als dass der Stromfluss unterbrochen werden könnte. Dann bildet sich eben zwischen den zwei Kontakten ein Lichtbogen aus. Neben einem im Stromkreis in Serie sich ausbildenden Lichtbogen kann der Lichtbogen auch zwischen Phase und Neutralleiter des Stromkreises entstehen. Treten Lichtbögen auf, so erhöht sich die Temperatur der umliegenden Bauteile, und es kann ein Brand entstehen.

Es ist daher sinnvoll, eine Einrichtung bereitzustellen, mit der ein Schutz vor Lichtbögen gewährleistet ist. In den USA, in denen die so genannte UL-Technik (Underwriters laboratories, Norm mit 110 V Netzspannung) verwendet wird, sind derartige Einrichtung sogar vorgeschrieben. Dort werden Lichtbogenschutzschalter eingesetzt, und zwar erfassen diese anhand vorbestimmter Kriterien, ob ein Lichtbogen in dem Stromkreis vorliegt und weisen selbst einen Trennkontakt auf, der im Falle des Vorliegens eines Lichtbogens geöffnet wird. Die in Lichtbogenschutzschaltern verwendeten Prinzipien sind in US-Patent 5,729,145 und US-Patent 6,031,699 beschrieben. In den europäischen Ländern, in denen die IEC-Technik (International Electrotechnical Commission, Norm mit einer Spannung von 230 V) eingesetzt wird, sind Lichtbogenschutzschalter nicht zwingend vorgeschrieben. Stromkreise in IEC-Technik sind mit Fehlerschutzstromschalter und Leitungsschutz geschützt. Sollte zu diesen noch ein eigener Lichtbogenschutzschalter hinzutreten, wäre dies mit einem hohen Aufwand verbunden.

Die Erfindung betrifft ein Modul nach dem Oberbegriff des Patentanspruchs 1. Ein solches Modul ist bereits aus der Druckschrift DE 43 16 239 A bekannt.

Darin wird eine Schaltung zum Erkennen eines Auftretens eines Lichtbogens in einer zu überwachenden Schaltung beschrieben, wobei die Schaltung keine eigenen Mittel zum Unterbrechen eines Stromkreises aufweist. Stattdessen wird bei Auftreten eines Lichtbogens ein Fehlerstromschutzschalter in der Weise überbrückt, dass ein Fehlerstrom in dem Stromkreis simuliert und daraufhin ein Trennkontakt des Fehlerstromschutzschalters geöffnet wird.

In der Druckschrift US 5 886 861 A wird eine Einheit zum Erkennen von Lichtbögen beschrieben, die ein eine Schmelzsicherung auslösenden Kurzschluss in einem zu schützenden Stromkreis verursacht, falls ein Lichtbogen detektiert wird.

Eine Kombination einer Fehlerstromschutzeinheit mit einer Lichtbogenschutzeinheit ist aus den Druckschriften US 6,259,340 B1 und WO 00/36623 A1 bekannt.

Es ist Aufgabe der Erfindung, einen Schutz von Stromkreisen, insbesondere solchen in IEC-Technik, vor Lichtbögen zu ermöglichen, ohne dass ein übermäßiger Aufwand getrieben wird.

Die Aufgabe wird durch ein Modul mit den Merkmalen gemäß Patentanspruch 1 und durch Reihenschaltungen mit den Merkmalen gemäß Patentanspruch 7 gelöst.

Das erfindungsgemäße Modul zum Schutz vor in einem Stromkreis auftretenden Lichtbögen umfasst Mittel zum Erfassen, ob ein Lichtbogen in dem Stromkreis auftritt. Das Modul umfasst auch Mittel zum Veranlassen des Öffnen eines Trennkontaktes. Es handelt sich jedoch vorliegend nicht um einen in dem Modul ausgebildeten Trennkontakt, sondern die Mittel zum Veranlassen bewirken das Öffnen eines Trennkontaktes in einem von dem Modul verschiedenen Schutzschalter. Die Erfindung baut auf der Erkenntnis auf, dass ein solcher weiterer Schutzschalter mit zumindest einem in dem Stromkreis geschalteten bzw. angeordneten Trennkontakt regelmäßig ohnehin zur Verfügung steht, und dass genau dieser Trennkontakt zur Unterbrechung des Stromkreises benutzt werden kann. Das erfindungsgemäße Modul ist wegen des Verzichts auf eigene Trennkontakte unaufwändig und kann daher kompakt gebaut sein, insbesondere kompakter als herkömmliche Lichtbogenschutzschalter mit eigenem Trennkontakt sind.

Das Veranlassen des Öffnens des Trennkontakts bzw. einer Mehrzahl von Trennkontakten des von dem Modul verschiedenen Schutzschalters wird mechanisch durch die Mittel zum Veranlassen bewirkt. Hierzu ist das Modul erfindungsgemäß mechanisch mit einem Schutzschalter koppelbar. Die Mittel zum Veranlassen des Moduls weisen einen Auslösemechanismus auf, der eben bei mechanischer Kopplung des Moduls mit dem Schutzschalter auf diesen einwirken kann. Schutzschalter, die eine mechanische Kopplung mit einem anderen Modul ermöglichen, sind als solche bekannt, z. B. sind Leitungsschutzschalter bekannt, die mit einem Fehlerstrommodul mechanisch koppelbar sind. Somit ist eine Reihenschaltung mit den Merkmalen gemäß Patentanspruch 7 ermöglicht, nämlich eine Reihenschaltung aus einem erfindungsgemäßen Modul und einem Schutzschalter mit zumindest einem Trennkontakt. Das Modul weist besagten Auslösemechanismus auf, und der Schutzschalter soll eben so ausgelegt sein, dass eine mechanische Kopplung mit dem Modul ermöglicht ist dergestalt, dass die Mittel zum Veranlassen des Moduls ein Öffnen des zumindest einen Trennkontakts über die mechanische Kopplung bewirken können. Da Modul und Schutzschalter koppelbar sind, sollten sie bei der erfindungsgemäßen Reihenschaltung auch tatsächlich mechanisch so miteinander gekoppelt sein, denn dann bewirken die Mittel zum Veranlassen des Moduls auch tatsächlich ein Öffnen des zumindest einen Trennkontakts über die mechanische Kopplung im Auslösefall, nämlich in dem Fall, dass die Mittel zum Erfassen, ob ein Lichtbogen in dem Stromkreis auftritt, eben das Vorhandensein eines Lichtbogens im Stromkreis erfassen.

Um erfassen zu können, ob ein Lichtbogen in dem Stromkreis auftritt, sollte das Modul in dem zu schützenden Stromkreis geschaltet sein. Hierfür weist es vorzugsweise für je eine Leitung (Phase oder Nullleiter bzw. drei Phasen und einen Nullleiter) einen Eingangsanschluss und einen Ausgangsanschluss auf, und diese sind paarweise über eine Verbindungsleitung miteinander verbunden. Der Strom fließt in dem Stromkreis somit über besagte Verbindungsleitungen, und die Mittel zum Erfassen können an zumindest einer dieser Verbindungsleitungen eine Information über den in dem Stromkreis fließenden Strom im Betrieb gewinnen.

Eine zum Erfassen, ob ein Lichtbogen in dem Stromkreis auftritt, wichtige Information ist die Amplitude des Stroms. Geeignete Mittel zum Messen dieser Amplitude sollten daher bereitgestellt sein, und diese können einen Stromwandler und einen nachgeschalteten Verstärker umfassen. Der Stromwandler muss lediglich an einer einzigen der Verbindungsleitungen angeordnet sein.

Es kann auch anhand des Hochfrequenzrauschens des Stroms erfasst werden, ob ein Lichtbogen im Stromkreis auftritt. Somit umfassen die Mittel zum Erfassen in einer bevorzugten Ausführungsform einen Hochfrequenzempfänger.

Zu den Mitteln zum Erfassen gehört bevorzugt auch eine Auswerteeinheit, die bevorzugt eine elektronische Auswerteeinheit ist, und diese empfängt von den Mitteln zum Messen der Amplitude die Messsignale und die Ausgangssignale des HF-Empfängers. Bei Erfüllung bestimmter Kriterien steuert die Auswerteeinheit einen Schalter an. Die Auswerteeinheit, die als Mikrocontroller ausgebildet sein kann, auf dem ein Algorithmus abläuft, kann nach sehr komplexen Kriterien und Kriterienkombinationen vorgehen. Die beiden Hauptkriterien, anhand derer erfasst werden kann, ob ein Lichtbogen auftritt, bestehen in dem Überschreiten einer bestimmten Amplitude durch den Strom, z. B. wenn die Stromstärke 5 A überschreitet, und in einer periodischen Variation des hochfrequenten Rauschens mit dem Strom.

Das Veranlassen des Öffnens eines Trennkontakts durch Mittel zum Veranlassen kann grundsätzlich elektrisch oder mechanisch erfolgen. Zwar ist es möglich, ein elektrisches Steuersignal an den Schutzschalter auszusenden, das ein Öffnen des Trennkontakts bewirkt. In der IEC-Technik sind Schutzschalter allerdings netzspannungsunabhängig und arbeiten daher nicht mit Steuersignalen. Hier ist es sinnvoll, einfach ein automatisches Auslösen des Schutzschalters zu bewirken. Bei einem aus dem Stand der Technik bekannten, in dem Stromkreis geschalteten Fehlerstromschutzschalter kann ein Auslösen bewirkt werden, indem Mittel zum Veranlassen in dem Stromkreis einfach einen Fehlerstrom hervorrufen. Als Fehlerstrom ist vorliegend ein Strom anzusehen, der von einer Stromleitung (z. B. Phase) zur anderen Stromleitung (z. B. Nullleiter) fließt, und zwar an dem Fehlerschutzstromschalter vorbei. Damit dies bei einem Modul ermöglicht wird, muss der Fehlerstrom von einem Abgriff vor dem Fehlerstromschutzschalter zu einem Abgriff hinter dem Fehlerstromschutzschalter (also vor oder an einem Eingangsanschluss des Fehlerstromschutzschalters und an oder nach einem Ausgangsanschluss des Fehlerstromschutzschalters) fließen. Wird das erfindungsgemäße Modul in Reihe mit dem Fehlerstromschutzschalter geschaltet, so ist ein erster dieser Abgriffe bereitgestellt, und damit ein zweiter dieser Abgriffe bereitgestellt werden kann, sollte das Modul einen externen Anschluss umfassen, der dann eben mit der anderen Schaltungsseite des Fehlerstromschutzschalters als der des Moduls im Übrigen gekoppelt werden kann. Der externe Anschluss wird über eine durch einen Schalter trennbare Leitung mit einer der Verbindungsleitungen zwischen Eingangsanschluss und Ausgangsanschluss des Moduls gekoppelt.

Dadurch wird folgende Reihenschaltung ermöglicht: Die Verbindungsleitungen des Moduls sind in Reihe mit den den oder die Trennkontakt(e) aufweisenden Verbindungsleitungen des Fehlerstromschutzschalters geschaltet, und besagter externer Anschluss des Moduls ist dann mit der dem Modul in der Reihenschaltung abgewandten Seite des Fehlerschutzschalters gekoppelt. Ist also das Modul in der Reihenschaltung hinter dem Fehlerschutzstromschalter angeordnet, muss der externe Anschluss mit einem Abgriff vor dem Fehlerstromschutzschalter gekoppelt (verbunden) werden und umgekehrt.

Die Mittel zum Veranlassen können in an sich bekannter Weise eine die Verbindungsleitungen überbrückende Leitung umfassen, die durch einen Schalter trennbar ist, wobei in der Verbindung durch die Leitung ein magnetisches Auslöseelement angeordnet ist, das bei Schließen des Schalters (bzw. grundsätzlich bei geschlossenem Schalter) auf den Auslösemechanismus einwirkt. Besagter Schalter ist dann durch die oben genannte Auswerteeinheit ansteuerbar, z. B. kann ein Relais vorgesehen sein, das von der Auswerteeinheit mit Strom beschickt wird.

Nachfolgend werden bevorzugte Ausführungsformen der Erfindung unter Bezug auf die Zeichnung beschrieben, wobei
FIG 1 schematisch eine Anordnung, nämlich eine Reihenschaltung, veranschaulicht, bei der eine Ausführungsform eines Moduls gemäß dem Stand der Technik verwendet ist,
FIG 2 schematisch eine Anordnung (Reihenschaltung) gemäß der Erfindung veranschaulicht, bei der eine Ausführungsform des erfindungsgemäßen Moduls verwendet ist,
FIG 3 schematisch eine Anordnung (Reihenschaltung) gemäß der Erfindung veranschaulicht, bei der ebenfalls die Ausführungsform des erfindungsgemäßen Moduls aus FIG 2 verwendet ist.

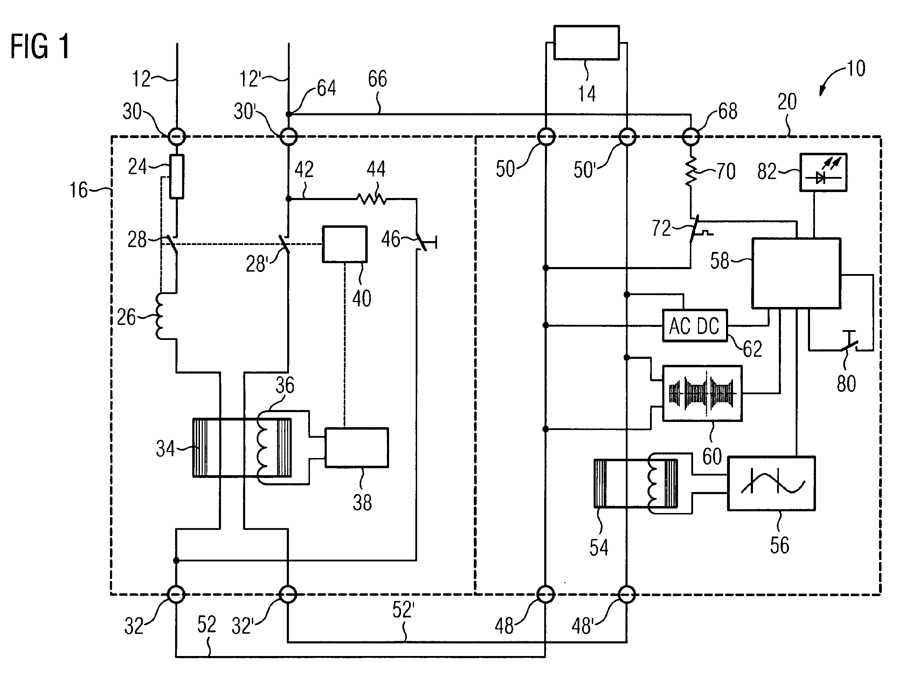

Die in den FIG 1 bis 3 gezeigten Anordnungen 10, 10' bzw. 10" sind Reihenschaltungen aus einem Schutzschalter und einem Modul, und zwar sind diese als Teil eines Stromkreises vorgesehen, um auf den Stromfluss innerhalb dieses Stromkreises Einfluss nehmen zu können. Die Anordnungen 10, 10' und 10" werden über Leitungen 12, 12' mit einer Spannungsquelle, üblicherweise dem Versorgungsnetz, gekoppelt. Auf der anderen Seite sind die Verbraucher angekoppelt, vorliegend ist symbolisch der Verbraucher 14 dargestellt. Bei den Anordnungen 10, 10' und 10" ist der verwendete Schutzschalter prinzipiell bekannt, und zwar handelt es sich in den Anordnungen 10 und 10' um einen kombinierten Leitungsschutzschalter und Fehlerschutzschalter 16 und bei der Anordnung 10" um einen einfachen Leitungsschutzschalter 18. Diese Schutzschalter 16 bzw. 18 sind Teil der Anordnung 10, 10' bzw. 10", weil ein Modul ein Schalten des Schutzschalters hervorruft. Bei der Anordnung 10 ist ein Modul 20 gemäß einer Ausführungsform aus dem Stand der Technik und bei den Anordnungen 10' und 10" ein erfindungsgemäßes Modul 22 gemäß einer Ausführungsform verwendet.

In an sich bekannter Weise weisen die Schutzschalter 16 bzw. 18 für die Funktion als Leitungsschutzschalter einen thermischen Auslöser 24 und einen magnetischen Auslöser 26 auf. Der thermische Auslöser 24 ist üblicherweise als Bimetallelement ausgeführt. Der thermische Auslöser 24 soll ein Unterbrechen des Stromkreises, also der Verbindung zwischen den Leitungen 12, 12' einerseits und dem Verbraucher 14 andererseits, bewirken, wenn der fließende Strom dauerhaft eine zu hohe Stromstärke hat. Ein Bimetallelement verbiegt sich aufgrund der ohmschen Wärme bei einem Überstrom. Der thermische Auslöser 24 wirkt dann auf einen Trennkontakt 28 bzw. 28' ein. Die Trennkontakte 28 bzw. 28' sind in einer Verbindungsleitung zwischen einem Eingangsanschluss 30 bzw. 30' einerseits und einem Ausgangsanschluss 32 bzw. 32' des Schutzschalters 16 bzw. 18 andererseits angeordnet.

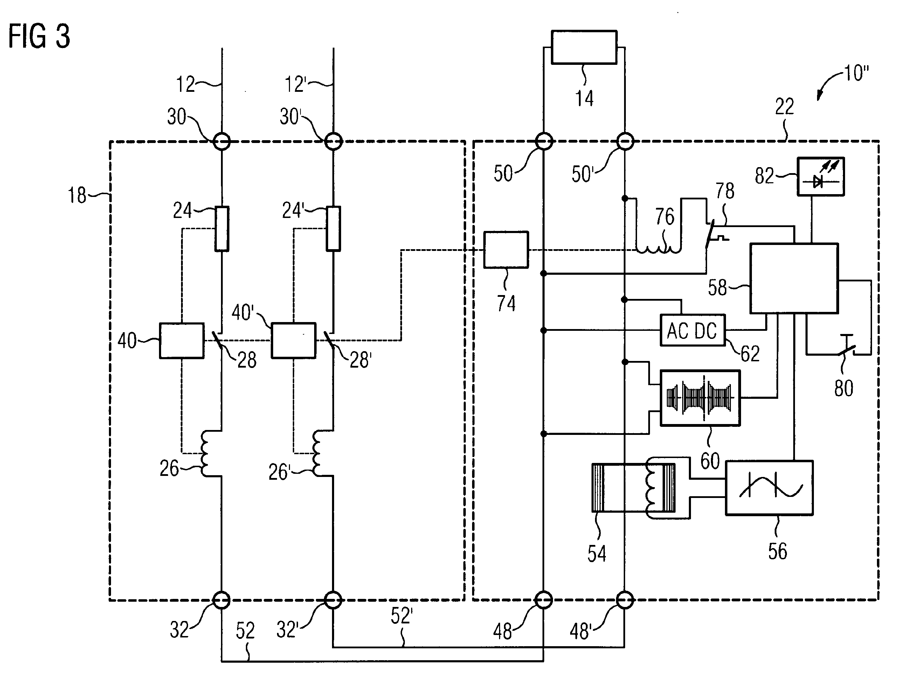

Der magnetische Auslöser 26 dient ebenfalls zum Öffnen der Trennkontakte 28 bzw. 28', und zwar bei einem Kurzschlussstrom. Der magnetische Auslöser 26 ist in den FIG durch eine Spule symbolisiert, denn üblicherweise induziert der Kurzschlussstrom in dem magnetischen Auslöser 26 ein Magnetfeld, und dies bewirkt eine Verschiebung eines in den FIG nicht gezeigten mechanischen Elements, das eben auf die Kontakte 28 bzw. 28' einwirkt. Bei dem Leitungsschutzschalter 18 aus FIG 3 sind die Auslöser 24 und 26 doppelt ausgeführt, nämlich in der Verbindungsleitung zwischen dem Eingangsanschluss 30 und dem Ausgangsanschluss 32 einerseits und als Elemente 24' bzw. 26' in der Verbindung zwischen dem Eingangsanschluss 30' und dem Ausgangsanschluss 32' andererseits.

Bei dem kombinierten Schutzschalter 16 ist zusätzlich zu den Elementen 24 und 26 ein Summenstromwandler 34 vorgesehen. Durch den Summenstromwandler 34 sind beide Verbindungsleitungen, vom Anschluss 30 zum Anschluss 32 einerseits und vom Anschluss 30' zum Anschluss 32' andererseits, geführt. Im Regelfall, dass kein Fehlerstrom auftritt, also sämtlicher Strom, der über eine der Leitungen 12 und 12' zugeführt wird, auch über die jeweils andere Leitung der Leitungen 12 und 12' zurückgeführt wird, gleichen sich die Ströme in den beiden Verbindungsleitungen, die durch den Summenstromwandler 34 geführt sind, genau aus, und insbesondere heben sich die durch diese Ströme erzeugten Magnetfelder auf. Sobald ein Fehlerstrom auftritt, wird in dem Summenstromwandler 34 ein Restmagnetfeld induziert. Dieses induziert einen Strom in einer Sekundärwicklung 36 des Summenstromwandlers 34, wodurch ein Haltemagnet 38 bewegt wird, der auf einen Auslösemechanismus 40 einwirkt, und dieser Auslösemechanismus 40 bewirkt ein Öffnen der Trennkontakte 28 bzw. 28'.

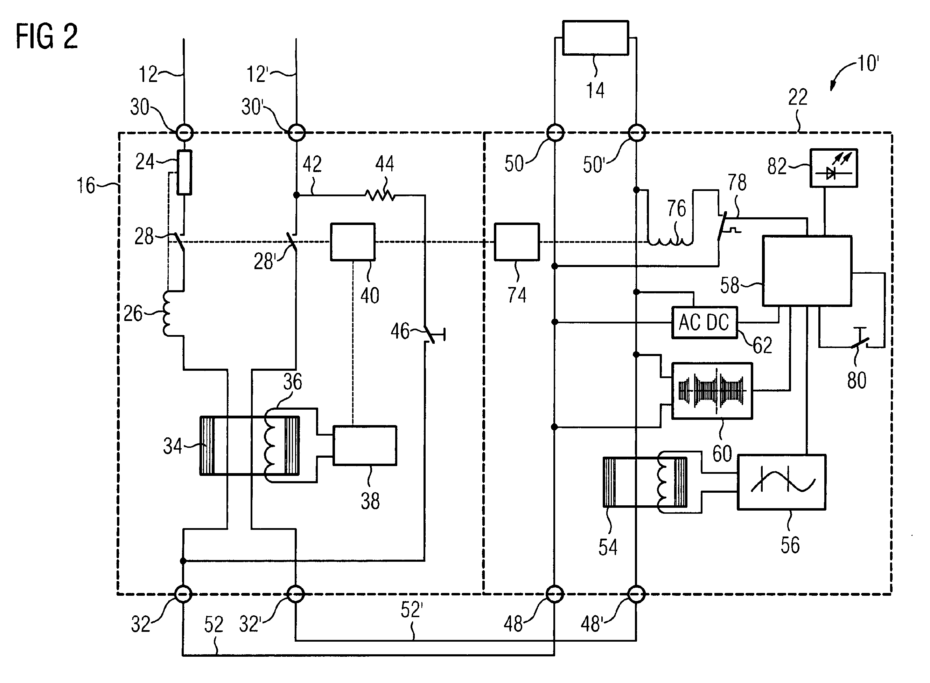

Ist die Funktionalität eines Fehlerschutzstromschalters bereitgestellt, ist regelmäßig eine Prüfmöglichkeit vorgesehen. Hierzu ist eine Verbindungsleitung 42 bereitgestellt, und zwar verbindet diese den einen Eingangsanschluss 30' mit dem anderen Eingangsanschluss 30 derart, dass ein fließender Strom den Summenstromwandler 34 nur einfach durchläuft. Vorliegend ist durch die Verbindungsleitung 42 der in der FIG 1 bzw. 2 rechte Durchlauf des Summenstromwandlers 34 umgangen, und der Strom fließt lediglich durch den linken Durchlauf, also in der Verbindungsleitung zwischen dem Eingangsanschluss 30 und dem Ausgangsanschluss 32. Damit der Strom über die Verbindungsleitung 42 begrenzt ist, ist ein Widerstandselement 44 vorgesehen. Der Strom soll nicht ständig über die Verbindungsleitung 42 fließen. Daher ist diese durch einen Schalter 46 unterbrochen, der vermittels einer Prüftaste betätigbar ist.

Die Module 20 bzw. 22 sind nun in Reihe zu den Schutzschaltern 16 bzw. 18 geschaltet. Hierzu weisen die Module 20 bzw. 22 jeweils Eingangsanschlüsse 48 bzw. 48' und Ausgangsanschlüsse 50 bzw. 50' auf. Eine Verbindungsleitung zwischen dem Eingangsanschluss 48 und dem Ausgangsanschluss 50 einerseits sowie eine Verbindungsleitung zwischen dem Eingangsanschluss 48' und dem Ausgangsanschluss 50' andererseits ist dadurch in den Stromkreis schaltbar. Vorliegend ist der Ausgangsanschluss 32 des Schutzschalters 16 bzw. 18 mit dem Eingangsanschluss 48 des Moduls 20 bzw. 22 verbunden und der Ausgangsanschluss 32' des Schutzschalters 16 bzw. 18 mit dem Eingangsanschluss 48' des Moduls 20 bzw. 22 verbunden. Hierzu können die in den FIG gezeigten Verbindungsleitungen 52 bzw. 52' eingesetzt werden, es kann aber auch eine direkte Ankopplung durch Verwendung von geeigneten Steckkontakten an dem Schutzschalter 16 bzw. 18 einerseits und dem Modul 20 bzw. 22 andererseits erfolgen. Der Verbraucher 14 ist an einer Seite mit dem Ausgangsanschluss 50 des Moduls 20 bzw. 22 und an der anderen Seite mit dem Ausgangsanschluss 50' des Moduls 20 bzw. 22 verbunden.

Die Schutzschalter 16 und 18 bewirken ein Unterbrechen des Stromkreises bei einem Überstrom und bei einem Kurzschlussstrom, und der kombinierte Schutzschalter 16 unterbricht darüber hinaus den Stromkreis bei einem Fehlerstrom. Nun soll der Stromkreis auch dann unterbrochen werden, wenn in dem Stromkreis an irgendeiner Stelle ein Lichtbogen aufgetreten ist. Hierzu muss zunächst einmal überhaupt erkannt werden, dass ein solcher Lichtbogen aufgetreten ist. Der Lichtbogen kann nicht am Ort seines Auftretens, das bei einem beliebigen Verbraucher sein kann, erkannt werden, sondern muss anhand des Stromflusses in dem Stromkreis erkannt werden. Die Module 20 und 22 weisen hierzu zwei verschiedene Einheiten auf: Zum einen ist eine der Verbindungsleitungen zwischen Eingangsanschluss und Ausgangsanschluss des Moduls 20 bzw. 22, vorliegend die Verbindungsleitung zwischen dem Eingangsanschluss 48' und dem Ausgangsanschluss 50', durch einen Stromwandler 54 geführt. Dem Stromwandler 54 ist ein Verstärkermodul 56 nachgeordnet, und das Verstärkermodul 56 ist mit einer Auswerte- und Steuereinheit 58 verbunden. Letzterer werden somit Daten über den in dem Stromkreis fließenden Laststrom zugeführt, wobei vorliegend von der Auswerteeinheit insbesondere die Amplitude des Laststroms erfasst wird. Als zweite Messeinheit, die zum Erfassen dient, ob ein Lichtbogen in dem Stromkreis auftritt, ist ein Hochfrequenzempfänger 60 in dem Modul 20 bzw. 22 bereitgestellt, und zwar greift er Signale zwischen der Verbindungsleitung zwischen dem Eingangsanschluss 48 und dem Ausgangsanschluss 50 einerseits und der Verbindungsleitung zwischen dem Eingangsanschluss 48' und dem Ausgangsanschluss 50' andererseits ab. Die Messsignale werden ebenfalls der Auswerte- und Steuereinheit 58 zugeführt. Die Auswerte- und Steuereinheit 58 kann ein herkömmlicher Mikrocontroller sein. Um diesen mit Energie zu versorgen, ist ein Gleichrichter (AC/DC-Spannungswandler) 62 bereitgestellt, der die notwendige Gleichspannung zum Betrieb des Mikrocontrollers bereitstellt.

In der Auswerte- und Steuereinheit 58 wird ein Algorithmus eingesetzt, um anhand der von dem Verstärker 56 und dem Hochfrequenzempfänger 60 zugeführten Signale zu erkennen, ob in dem Stromkreis ein Lichtbogen aufgetreten ist bzw. zumindest aufgetreten sein könnte. Ein Lichtbogen ist zum einen durch einen Anstieg der Stromamplitude über ein vorbestimmtes Niveau oder auch bestimmte Stromsteigerungen erkennbar. Genaueres hierzu ist in dem US-Patent 6,031,699 beschrieben. Ein Lichtbogen ist zum anderen auch anhand des Hochfrequenzrauschens erkennbar, insbesondere an einem periodischen Verhalten desselben mit dem Strom. Details hierzu sind in dem US-Patent 5,729,45 beschrieben. Der von der Auswerte- und Steuereinheit 58 verwendete Algorithmus kann beide Kriterien alternativ, bevorzugt aber in Kombination verwenden, wobei über die genannten einfachen Zusammenhänge hinaus auch kompliziertere Zusammenhänge durch einen geeigneten Algorithmus erkennbar sein können. Den Modulen 20 und 22 ist somit gemeinsam, dass durch die Mittel 54, 56, 60 und den Auswertealgorithmus in der Auswerte- und Steuereinheit 58 erfasst wird, ob ein Lichtbogen in dem Stromkreis auftritt.

Diese Erfassung ist selbstverständlich nur dann sinnvoll, wenn eine Unterbrechung des Stromkreises nach dem Erkennen des Auftretens eines Lichtbogens erfolgt. Beiden Modulen 20 und 22 ist gemeinsam, dass keine eigenen Trennkontakte nach Art der Trennkontakte 28 und 28' des Schutzschalters bereitgestellt werden, welche geöffnet werden könnten. Stattdessen veranlassen beide Module 20 und 22 ein Öffnen der Trennkontakte 28 und 28' des in Reihe geschalteten Schutzschalters 16 bzw. 18.

Bei dem Modul 20 erfolgt dies unter Nutzung des automatischen Auslösemechanismus, insbesondere des Auslösemechanismus, der einen Fehlerstrom benötigt. Bei dem Modul 22 hingegen wird über eine mechanische Kopplung zu dem Schutzschalter 16 bzw. 18 mehr oder weniger direkt (nämlich nur über den Umweg des Auslösemechanismus 40) ein Öffnen der Trennkontakte 28 und 28' bewirkt.

Das dem erfindungsgemäßen Modul 20 zugrunde liegende Prinzip ist ganz einfach: Es wird einfach künstlich ein Fehlerstrom erzeugt, und dies hat zur Folge, dass in dem Schutzschalter 16 selbiger erkannt wird und durch den oben beschriebenen Automatismus die Trennkontakte 28 und 28' geöffnet werden. Wie oben bereits anhand der Verbindungsleitung 42 erläutert, muss der künstliche Fehlerstrom so fließen, dass er eine den Summenstromwandler 34 durchdringende Leitung durchfließt, die zweite aber nicht. Dies ist nur möglich, wenn auf der dem Modul 20 schaltungsmäßig abgewandten Seite des Schutzschalters 16 ein Abgriff erfolgt, nämlich vorliegend an einem Abgriffspunkt 64 vor oder an dem Eingangsanschluss 30' des Schutzschalters 16. Der Abgriff 64 wird über eine Verbindungsleitung 66 mit einem externen Anschluss 68 des Moduls 20 verbunden. Der externe Anschluss 68 ist über einen Widerstand 70 und einen Schalter 72 mit der den Eingangsanschluss 48 mit dem Ausgangsanschluss 50 des Moduls 20 verbindenden Leitung verbunden. Es ist zu beachten, dass der Fehlerstrom von dem einen Leitungspfad zu dem anderen Leitungspfad fließen muss, also zwischen dem nicht gestrichelten System mit der Leitung 12 und den Anschlüssen 30, 32, 48 und 50 einerseits und dem gestrichelten System mit den Leitungen 30', 32', 48' und 50' andererseits. Da die interne Verbindung von dem externen Anschluss 68 vorliegend zu dem ungestrichelten System (Verbindungsleitung zwischen Anschlüssen 48 und 50) erfolgt, muss der externe Anschluss außerhalb des Moduls 20 mit dem gestrichelten System verbunden werden, vorliegend also mit der Leitung 12'. Erkennt nun die Auswerte -und Steuereinheit 58, dass ein Lichtbogen aufgetreten ist, dann wird ein Steuerstrom ausgesandt, der ein in der FIG nicht gezeigtes Relais dazu veranlasst, den Schalter 72 zu schließen. Somit fließt ein künstlicher Fehlerstrom, es wird ein entsprechendes Magnetfeld in der Sekundärwicklung 36 des Summenstromwandlers 34 induziert, der Haltemagnet 38 bewegt sich, wirkt auf den Auslösemechanismus 40 ein, und die Trennkontakte 28 und 28' werden geöffnet. Das Modul 20 hat also keinen eigenen Auslösemechanismus, sondern nutzt die Funktionalität des in Reihe geschalteten Schutzschalters 16. Es ist zu beachten, dass ein Schutzschalter nach Art des kombinierten Schutzschalters 16 in IEC-Systemen ohnehin üblicherweise vorhanden ist. Das zusätzliche Bereitstellen des Moduls 20 und dessen In-Reihe-Schalten mit dem Schutzschalter 16 ist relativ unaufwändig, insbesondere im Vergleich zu dem Fall, dass ein eigener Schutzschalter zum Schutz des Stromkreises vor Lichtbögen mit eigenen Trennkontakten bereitgestellt würde.

Das Modul 22 bewirkt durch ein anderes Prinzip das Öffnen der Trennkontakte 28 und 28' des mit dem Modul 22 in Reihe geschalteten Schutzschalters 16 bzw. 18, und zwar über eine mechanische Kopplung. Von Fehlerstromschutzmodulen ist es bekannt, einen Auslösemechanismus in dem Modul anzuordnen, der mit einem Auslösemechanismus eines Leitungsschutzschalters, der Trennkontakte aufweist, bei vorbestimmten Ausführungen eines solchen Schutzschalters koppelbar ist, damit eben der Auslösemechanismus des Moduls letztlich das Öffnen der Trennkontakte des angekoppelten Schutzschalters bewirkt. Dieses Prinzip wird vorliegend auch für das Modul 22 eingesetzt. Das Modul 22 weist einen Auslösemechanismus 74 auf, der eben mit dem Auslösemechanismus 40 des kombinierten Schutzschalters 16 bzw. den Auslösemechanismen 40 und 40' des Leitungsschutzschalters 18 koppelbar ist. Der Auslösemechanismus 74 wird in an sich bekannter Weise von einem magnetischen Auslöser 76 betätigt, und zwar indem ein Magnetfeld in dem magnetischen Auslöser 76 erzeugt wird, das ein Bauteil in dem magnetischen Auslöser 76 bewegt. Der magnetische Auslöser 76 ist in einer Verbindungsleitung angeordnet, die die Verbindungsleitung zwischen dem Eingangsanschluss 48 und dem Ausgangsanschluss 50 des Moduls 22 einerseits mit der Verbindungsleitung zwischen dem Eingangsanschluss 48' und dem Ausgangsanschluss 50' des Moduls 22 andererseits verbindet, und zwar auch hier über einen Schalter 78, der vermittels eines Relais geschlossen werden kann. Das Relais wird eben von der Auswerte- und Steuereinheit 58 mit einem entsprechenden Steuerstrom beaufschlagt, wenn der Schalter 78 geschlossen werden soll, damit der Auslösemechanismus 74 aktiviert wird und die Trennkontakte 28 und 28' des mechanisch mit dem Modul 22 gekoppelten Schutzschalters 16 bzw. 18 geöffnet werden.

Auch bei dem Modul 22 ist auf eigene Trennkontakte verzichtet, und es werden die in einem IEC-System ohnehin vorhandenen Trennkontakte des Leitungsschutzschalters 18 bzw. des kombinierten Schutzschalters 16 zum Unterbrechen des Stromkreises eingesetzt. Auch das Modul 22 ist im Vergleich zu einem eigenen Schutzschalter kompakt gebaut.

Die Funktion der Module 20 und 22 kann mithilfe einer Prüftaste 80 geprüft werden, die einen Stromkreis schließt, wobei der Stromfluss durch die Auswerte- und Steuereinheit 58 erkannt wird, diese ihren Algorithmus durchlaufen lässt und das zu dem Schalter 72 bzw. 78 gehörende Relais testweise ansteuert.

Eine Anzeige 82 zeigt den Zustand des Moduls und die erfasste Ursache der letzten Auslösung an. Dadurch kann ein Techniker schnell feststellen, ob ein Isolationsfehler oder tatsächlich ein gefährlicher Lichtbogen die Ursache der Auslösung war.

### Bezugszeichenliste

- 10, 10', 10": Anordnung
- 12,12': Leitung
- 14: Verbraucher
- 16,18: Schutzschalter
- 20,22: Modul
- 24,26: Auslöser
- 28, 28': Trennkontakt
- 30, 30', 48, 48': Eingangsanschlüsse
- 32, 32', 50, 50': Ausgangsanschlüsse
- 34: Summenstromwandler
- 36: Sekundärwicklung
- 38: Haltemagnet
- 40,74: Auslösemechanismen
- 42,52,52',66: Verbindungsleitungen
- 44: Widerstandselement
- 46,72,78: Schalter
- 54: Stromwandler
- 56: Verstärkermodul
- 58: Steuereinheit
- 60: Hochfrequenzempfänger
- 62: Gleichrichter
- 64: Abgriffspunkt
- 68: Anschluss
- 70: Widerstand
- 76: Auslöser
- 80: Prüftaste

## Patentansprüche

1. Modul (22) zum Schutz vor in einem Stromkreis auftretenden Lichtbögen unter Verzicht auf eigene Trennkontakte mit:
- Mitteln (54, 56, 60, 58) zum Erfassen, ob ein Lichtbogen in dem Stromkreis auftritt,
- Mitteln (58, 76, 78, 74) zum Veranlassen eines von dem Modul (22) verschiedenen Schutzschalters (16, 18) mit zumindest einem in dem Stromkreis angeordneten Trennkontakt (28, 28') zum Öffnen des Trennkontakts (28, 28'), um den Stromkreis zu unterbrechen,
**dadurch gekennzeichnet, dass**
das Modul (22) mechanisch mit einem Schutzschalter (16, 18) koppelbar ist und die Mittel zum Veranlassen einen Auslösemechanismus (74) aufweisen, der bei mechanischer Kopplung des Moduls (22) mit dem Schutzschalter (16, 18) auf diesen einzuwirken ausgelegt ist.

2. Modul (22) nach Anspruch 1, mit zumindest zwei Eingangsanschlüssen (48, 48') und mit zumindest zwei Ausgangsanschlüssen (50, 50'), wobei je ein Eingangsanschluss (48; 48') in dem Modul (22) über eine Verbindungsleitung mit je einem Ausgangsanschluss (50; 50') verbunden ist, so dass das Modul (22) in den zu schützenden Stromkreis schaltbar ist, und wobei im Betrieb die Mittel (54, 56, 60, 58) zum Erfassen von zumindest einer Verbindungsleitung eine Information über den in dem Stromkreis fließenden Strom gewinnen.

3. Modul (22) nach Anspruch 2, bei dem die Mittel zum Erfassen Mittel (54, 56, 58) zum Messen der Amplitude des über eine Verbindungsleitung fließenden Stroms umfassen.

4. Modul (22) nach Anspruch 2 oder 3, bei dem die Mittel zum Erfassen einen Hochfrequenzempfänger (60) umfassen.

5. Modul (22) nach Anspruch 3 oder 4, bei dem die Mittel zum Erfassen eine Auswerteeinheit (58) umfassen, die den Mitteln zum Messen (54, 56) oder dem Hochfrequenzempfänger (60) nachgeordnet oder Teil zumindest eines dieser ist, und die bei Erfüllung bestimmter Kriterien einen Schalter (72, 78) ansteuert.

6. Modul (22) nach einem der Ansprüche 2 bis 5, bei dem die Mittel zum Veranlassen eine die beiden Verbindungsleitungen überbrückende Leitung umfassen, die durch einen Schalter (78) trennbar ist, und in der ein magnetisches Auslöseelement (76) angeordnet ist, das bei Schließen des Schalters (78) auf den Auslösemechanismus (74) einwirkt.

7. Reihenschaltung (10', 10") aus einem Modul (22) nach einem der vorhergehenden Ansprüche und einem Schutzschalter (16, 18) mit zumindest einem Trennkontakt (28, 28'), wobei der Schutzschalter (16, 18) so ausgelegt ist, dass eine mechanische Kopplung mit dem Modul (22) ermöglicht ist derart, dass die Mittel (58, 76, 78, 74) zum Veranlassen des Moduls (22) ein Öffnen des zumindest einen Trennkontakts (28, 28') über die mechanische Kopplung bewirken können, und wobei Modul (22) und Schutzschalter (16, 18) tatsächlich mechanisch so gekoppelt sind.

## Claims

1. Module (22), having no isolating contacts of its own, for protecting against arcing occurring in an electric circuit, having:
- means (54, 56, 60, 58) for detecting whether arcing is occurring in the electric circuit,
- means (58, 76, 78, 74) for initiating which cause a circuit breaker (16, 18) different from the module (22) and having at least one isolating contact (28, 28') arranged in the electric circuit for opening the isolating contact (28, 28') in order to interrupt the electric circuit,
**characterised in that**
the module (22) can be mechanically coupled to a circuit breaker (16, 18) and the means for initiating have a triggering mechanism (74) which is designed to act on the circuit breaker (16, 18) when the module (22) is mechanically coupled thereto.

2. Module (22) according to claim 1, having at least two input terminals (48, 48') and having at least two output terminals (50, 50'), wherein one input terminal (48, 48') in the module (22) in each case is connected to one output terminal (50; 50') in each case via a connecting lead such that the module (22) can be connected into the electric circuit requiring to be protected, and wherein during operation the means (54, 56, 60, 58) for detecting obtain information from at least one connecting lead about the current flowing in the electric circuit.

3. Module (22) according to claim 2, wherein the means for detecting include means (54, 56, 58) for measuring the amplitude of the current flowing via a connecting lead.

4. Module (22) according to claim 2 or 3, wherein the means for detecting include a high-frequency receiver (60).

5. Module (22) according to claim 3 or 4, wherein the means for detecting include an evaluation unit (58) which is disposed downstream of the means for measuring (54, 56) or of the high-frequency receiver (60) or is part of at least one of these, and which operates a switch (72, 78) when certain criteria have been met.

6. Module (22) according to one of claims 2 to 5, wherein the means for initiating include a lead which bridges the two connecting leads and can be interrupted by means of a switch (78), and in which is arranged a magnetic trigger element (76) which acts on the triggering mechanism (74) when the switch (78) is closed.

7. Series connection (10', 10") consisting of a module (22) according to one of the preceding claims and a circuit breaker (16, 18) having at least one isolating contact (28, 28'), wherein the circuit breaker (16, 18) is embodied such that a mechanical coupling to the module (22) is made possible in such a way that the means (58, 76, 78, 74) for initiating of the module (22) can cause the at least one isolating contact (28, 28') to open via the mechanical coupling, and wherein module (22) and circuit breaker (16, 18) are actually mechanically coupled in that way.

## Revendications

1. Module (22) pour la protection contre des arcs apparaissant dans un circuit avec renoncement à des contacts de rupture propres, comprenant :
- des moyens (54, 56, 60, 58) pour détecter si un arc apparaît dans le circuit,
- des moyens (58, 76, 78, 74) pour contraindre un disjoncteur de protection (16, 18) différent du module (22) et comprenant au moins un contact de rupture (28, 28') disposé dans le circuit à l'ouverture du contact de rupture (28, 28'), pour interrompre le circuit,
**caractérisé en ce que**
le module (22) peut être couplé mécaniquement avec un disjoncteur de protection (16, 18) et que les moyens pour contraindre présentent un mécanisme de déclenchement (74) qui est conçu, dans le cas d'un couplage mécanique du module (22) avec le disjoncteur de protection (16, 18), pour agir sur celui-ci.

2. Module (22) selon la revendication 1, comprenant au moins deux branchements d'entrée (48, 48') et au moins deux branchements de sortie (50, 50'), à chaque fois un branchement d'entrée (48, 48') dans le module (22) étant relié par une ligne de liaison à respectivement à un branchement de sortie (50, 50'), de telle sorte que le module (22) peut être commuté dans le circuit à protéger, et les moyens (54, 56, 60, 58) destinés à la détection d'au moins une ligne de liaison récupérant, pendant le service, une information sur le courant circulant dans le circuit.

3. Module (22) selon la revendication 2, dans lequel les moyens pour l'enregistrement comprennent des moyens (54, 56, 58) pour mesurer l'amplitude du courant circulant sur une ligne de liaison.

4. Module (22) selon la revendication 2 ou 3, dans lequel les moyens pour l'enregistrement comprennent un récepteur à haute fréquence (60).

5. Module (22) selon la revendication 3 ou 4, dans lequel les moyens pour l'enregistrement comprennent une unité d'analyse (58) qui est disposée en aval des moyens pour mesurer (54, 56) ou du récepteur à haute fréquence (60) ou fait partie au moins de l'un d'eux, et qui actionne un interrupteur (72, 78) si certains critères sont remplis.

6. Module (22) selon l'une quelconque des revendications 2 à 5, dans lequel les moyens pour contraindre comprennent une ligne shuntant les deux lignes de liaison, qui peut être coupée par un interrupteur (78), et dans laquelle est disposé un élément de déclenchement (76) magnétique, qui agit sur le mécanisme de déclenchement (74) lors de la fermeture de l'interrupteur (78).

7. Montage en série (10', 10") comprenant un module (22) selon l'une des revendications précédentes et un disjoncteur de protection (16, 18) avec au moins un contact de rupture (28, 28'), le disjoncteur de protection (16, 18) étant conçu de telle sorte qu'un couplage mécanique avec le module (22) est rendu possible de telle sorte que les moyens (58, 76, 78, 74) pour contraindre du module (22) peuvent entraîner une ouverture de l'au moins un contact de rupture (28, 28') par le couplage mécanique, et le module (22) et le disjoncteur de protection (16, 18) étant couplés effectivement ainsi au plan mécanique.
